# EUROPÄISCHE PATENTSCHRIFT

(11) **EP 2 190 714 B1**
(45) Veröffentlichungstag und Bekanntmachung des Hinweises auf die Patenterteilung: **12.02.2014**
(21) Anmeldenummer: 08802226.4
(22) Anmeldetag: 16.09.2008
(51) Int. Cl.: B62B 3/06

(54) **TRANSPORTVORRICHTUNG FÜR LADUNGSTRÄGER UND VERFAHREN ZU DEREN STEUERUNG**
TRANSPORTING DEVICE FOR LOAD SUPPORTING ELEMENTS, AND METHOD FOR CONTROLLING THE SAME
DISPOSITIF DE TRANSPORT POUR ÉLÉMENTS PORTEURS DE CHARGE, ET SON PROCÉDÉ DE COMMANDE

(30) Priorität: 28.09.2007 DE 102007046868
(43) Veröffentlichungstag der Anmeldung: 02.06.2010
(60) Teilanmeldung: 13198107.8
(73) Patentinhaber: Universität Stuttgart, 70174 Stuttgart (DE)
(72) Erfinder: WEBER, Manuel, 72622 Nürtingen (DE)
(74) Vertreter: Ege & Lee Patentanwälte
(86) Internationale Anmeldenummer: PCT/EP2008/007692
(87) Internationale Veröffentlichungsnummer: WO 2009/043474

(56) Entgegenhaltungen:
- EP-A- 1 506 902
- WO-A-2006/083564
- FR-A- 2 487 804

## Beschreibung

Die Erfindung betrifft eine ferngesteuerte Transportvorrichtung für Ladungsträger und ein Verfahren zur Steuerung einer derartigen Vorrichtung.

Aus dem Stand der Technik sind nicht ferngesteuerte Hubwagen bekannt, die eine Lastgabel aufweisen, die in die Palette eingefahren und angehoben wird. Mittels einer Deichsel wird der Hubwagen gelenkt und von Hand oder fremdkraftbetätigt fortbewegt.

Wie beispielsweise in der DE 25 27 529 C2 angegeben werden derartige Vorrichtungen ferngesteuert betrieben.

Die Veröffentlichung "Trends bei Flurförderern und Nutzfahrzeugen - eine CeMAT-Nachlese", dhf 7/8, Seite 85 offenbart ein Flurförderfahrzeug mit Vierradlenkung. Die Veröffentlichung "Vierrad-Fahrzeug für den Werkzeugwechsel", F+H Fördern und Heben 46 (1996) Nr. 6, Seite 478 zeigt ein batteriebetriebenes Vierrad-Fahrzeug mit vollelektrischer Vierradlenkung.

Die EP 1506 902 A2 offenbart eine Transportvorrichtung mit Antriebseinrichtungen, die jeweils ein Antriebsrad unabhängig vom anderen antreiben. Ein gegensinniger Antrieb der Antriebsräder erlaubt dabei eine Rotation der Transportvorrichtung um eine zentrale Hochachse. Die Achse der Transportvorrichtung ist dabei starr angeordnet. Die Hubvorrichtung zum Anheben einer Ladung wird hydraulisch angetrieben.

Es ergibt sich daher die Aufgabe, eine ferngesteuerte Transportvorrichtung vorzuschlagen, die einfacher im Aufbau ist und einen geringeren Platzbedarf benötigt.

Die Aufgabe wird durch eine Transportvorrichtung für einen eine Last aufnehmenden Ladungsträger mit einer Einrichtung zum ferngesteuerten Betrieb, einem elektrischen Antrieb zum Lenken, Fahren und Anheben des Ladungsträgers, einem Steuergerät und einer Stromversorgung sowie einem Trägerteil zur Aufnahme des Ladungsträgers gelöst, wobei Antrieb, Steuergerät und Stromversorgung innerhalb eines Raumbereichs des Trägerteils angeordnet sind und das Trägerteil den Ladungsträger vollständig unterfährt. Es ist dabei vorgesehen, das Trägerteil als im Querschnitt U-förmig ausgebildet auszugestalten und in den sich bildenden Raum die einzelnen Funktionselemente unterzubringen. Auf diese Weise kann eine Trägervorrichtung im Sinne einer Lastgabel eines Hubwagens eingesetzt werden, die vollständig in das Lichtraumprofil eines Ladungsträgers wie beispielsweise einer Palette eingefahren und dort auch zu Lagerzwecken ohne weiteren Raumbedarf untergebracht werden kann. Auf diese Weise kann die Transport-vorrichtung bei räumlich beengten Verhältnissen beispielsweise in Lastkraftwagen in vorteilhafter Weise eingesetzt werden. Zum Transport einzelner Lasteinheiten ohne Palettierung kann es vorteilhaft sein eine Transportvorrichtung einzusetzen, die entsprechend ihrer Ausmaße an die Größe der Lasteinheiten angepasst sein können. Zum Transport von Paletten wird die Transportvorrichtung bevorzugt paarweise eingesetzt, wobei eine entsprechende Steuerung der beiden Transportvorrichtungen und deren Fernsteuerung koordiniert erfolgen kann, indem die beiden Transportvorrichtungen zumindest beim Transport des Ladungsträgers parallel und in einem festen Abstand voneinander als ein Teil gesteuert werden, während beim Rangieren ohne Ladung im Sinne einfacherer und schnellerer Manöver jede Transportvorrichtung für sich gesteuert werden kann.

Die Transportvorrichtung weist vorzugsweise zwei voneinander beabstandete Achsen mit jeweils vorzugsweise zwei separat von einer elektrischen Antriebseinheit angetriebenen Rädern auf. Je nach Länge der Transportvorrichtung und der von dieser aufzunehmenden Last können mehrere Achsen und mehrere Räder auf einer Achse vorgesehen werden. In vorteilhafter Weise ist vorgesehen, dass jedes Rad jeweils von einer Antriebseinheit angetrieben wird. Zwischen Rad und Antriebseinheit kann ein Getriebe zur Unter- oder Übersetzung vorgesehen sein. Die Übertragung der von den Antriebseinheiten auf die Räder übertragenen Kraft erfolgt bevorzugt formschlüssig, kann jedoch auch reibschlüssig erfolgen. Jede einzelne Antriebseinheit wird gemäß einer gewünschten Betriebsart von einer zentralen Steuereinheit, die auch eine Empfangs- und Sendefunktion für die Fernsteuerung der Transportvorrichtung beinhalten kann, separat angesteuert.

Das Trägerteil wird bevorzugt von den für den Antrieb der Räder vorgesehenen Antriebseinheiten angehoben und abgesenkt. Hierzu ist zwischen dem Trägerteil und jeweils einer Achse ein Getriebe, beispielsweise im einfachsten Fall eine Gewindestange oder Spindel, die in einer im Trägerteil oder vorzugsweise in der Achse fixierten Mutter verdreht wird oder eine Telskopspindel, die eine höhere Übersetzung beziehungsweise geringere Betätigungskräfte gewährleistet, vorgesehen. Um nicht bei jedem Lenkvorgang, der ebenfalls eine Verdrehung der Achse gegenüber dem Trägerteil vorsieht, einen Hub des Trägerteils zu bewirken, kann in dem Getriebe ein Freiwinkel, beispielsweise ± 90°, vorgesehen werden, bei dem kein Hub und lediglich eine Lenkung durch Verdrehen der Achse gegenüber dem Trägerteil stattfindet und ein Hub einsetzt, wenn die Achse über diesen Winkel hinaus bis zu einer mehrmaligen Rotation um den Aufnahmepunkt im Trägerteil verdreht wird.

Alternativ zu dem Freilauf kann eine Kupplung oder eine Rastvorrichtung mit einem Rastbolzen vorgesehen werden, die mittels eines beispielsweise ferngesteuerten Steuerbefehls und beispielsweise einer Aktorik wie Elektromagnet oder dergleichen das Getriebe bei einem gewünschten Verdrehwinkel blockieren beziehungsweise freigegeben. Die Kupplung kann sowohl reib- als auch formschlüssig wirken. Dabei kann beispielsweise der an der Achse befestigte Teil des Getriebes gegenüber dieser verdrehbar angeordnet sein, indem beispielsweise die Spindelmutter verdrehbar entlang der Hochachse der Achse angeordnet ist. Eine zwischen der Achse und dem Getriebe beziehungsweise Getriebeteil wie Spindelmutter wirksame Kupplung wird dabei zum Heben einer Last mittels einer Drehbewegung der Achse um ihre Hochachse durch gegensinnigen Antrieb der Räder beispielsweise durch Kraft-, Reib- oder Formschluss geschlossen. Ist die Kupplung geöffnet, kann sich die Achse gegenüber dem Getriebe verdrehen, ohne dass eine Übertragung der Drehbewegung erfolgt. Somit ist bei geöffneter Kupplung immer ein Lenken möglich ohne dass eine Hubbewegung auftritt. Bei geschlossener Kupplung bewirkt eine Drehbewegung gegenüber einem Freilauf im Bereich von ± 90° sofort eine Hubbewegung. In einem weiteren Ausgestaltungsbeispiel können eine entsprechende Kupplung oder ein entsprechender Rastbolzen auch zwischen Getriebe und Trägerteil vorgesehen sein, so dass das Getriebe im Ganzen mit der Achse während eines Lenkvorgangs durch Verdrehen der Achse um die Hochachse durch unterschiedlichen Antrieb der Räder dreht, jedoch infolge seines inneren Widerstands keine innere Bewegung, beispielsweise bei einem Spindelgetriebe durch eine relative Verdrehung der Spindel gegenüber der Mutter, ausführt.

Mittels der Transportvorrichtungen, insbesondere bei einer Verwendung als aus zwei Elementen zusammen wirkenden Hebe- und Transportvorrichtung für Paletten ist eine völlig geänderte Art des Manövrierens gegenüber Hubwagen möglich. So kann beispielsweise seitlich in eine Palette eingefahren und dann die Palette nach dem Anheben senkrecht zur Einfahrrichtung transportiert werden, eine Palette kann um ihre Hochsachse auf der Stelle gedreht werden, Transportvorrichtungen können durch eine flächige Palettenansammlung bei entsprechender Ausrichtung der Lichtraumprofile durchfahren. Zur Anpassung eines Trägerteils an die Länge der Ladungsträger kann es vorteilhaft sein, wenn das Trägerteil zumindest aus zwei gegeneinander verschiebbaren Teleskopteilen gebildet ist. Diese beiden Teile können jeweils eine Achse mit den anzutreibenden Rädern tragen und mittels entsprechend in den Teleskopteilen vorgesehenen Führungen oder Längsprofilen ineinander geschoben werden, wodurch die Transportvorrichtung verkürzt oder verlängert wird. Es kann vorteilhaft sein, wenn die eingestellte Positionierung der beiden Teleskopteile zueinander durch eine Rastierung oder dergleichen nach dem Verstellen fixiert wird.

Erfindungsgemäß wird die vorgeschlagene Transportvorrichtung ferngesteuert betrieben. Weiterhin ist zur Umsetzung der ferngesteuerten Befehle eine Steuerung der Funktionen der Transportvorrichtung nötig. Beispielsweise müssen die Antriebseinheiten zum Fahren, Lenken und Heben des Tragteils entsprechend gesteuert werden. Die Steuerung kann in wörtlichem Sinne als reine Ausgabe von Steuergrößen an die Antriebseinheiten und/oder als Regelung zu verstehen sein, wobei bei einer Regelung entsprechende Ist-Größen wie beispielsweise elektrische Signale der Antriebseinheiten und/oder Signale entsprechend zur Überwachung vorgesehene Sensoren in einer Regelschleife berücksichtigt werden. Weiterhin können zur Steuerung von außen empfangene Größen wie beispielsweise Abstandssignale, ein GPS-Signal und/oder dergleichen zur Orientierung der Transportvorrichtung im Raum, gegenüber Hindernissen, Ladungsträgern und/oder anderen Transporteinheiten ausgewertet werden. Es kann beispielsweise vorteilhaft sein, mehrere Trägervorrichtungen beziehungsweise mehrere Paare von Trägereinrichtungen dazu einzusetzen, mehrere Ladungsträger im Pulk hintereinander oder nebeneinander zu transportieren, um beispielsweise ein Fahrzeug zügig zu be- oder entladen, wobei die Ladungsträger in einem vorgegebenen Abstand voneinander ferngesteuert mittels Gruppenbefehlen, die den gesamten Pulk steuern, aufgenommen bewegt und wieder abgesetzt werden.

Die Steuerung der Fortbewegung kann in vorteilhafter Weise dadurch erfolgen, dass die Transportvorrichtung durch einen gleichsinnigen Antrieb aller Räder fortbewegt und durch unterschiedlichen Antrieb von Rädern mit unterschiedlicher Drehzahl und/oder Drehsinn gelenkt wird, wodurch sich die Achse gegenüber ihrem Aufnahmepunkt an dem Trägerteil verdreht. Eine Hubbewegung des Trägerteils kann in vorteilhafter Weise erzielt werden, indem bei entgegengesetztem Antrieb der Räder einer Achse die Achse drehangetrieben wird und nachfolgend das zwischen Achse und Trägerteil wirksame Spindelgetriebe angetrieben wird, wodurch an der entsprechenden Achse das Trägerteil angehoben wird. Bei gleichzeitiger Betätigung der Räder beider Achsen wird die Last nivelliert angehoben. Beispielsweise zum Ausgleich einer Neigung des Ladungsträgers an Steigungen kann vorgesehen sein, dass ein Hub an beiden Achsen unterschiedlich eingestellt wird.

Im Fall einer Verwendung eines Trägerteils mit zwei oder mehreren Teleskopteilen können diese gegeneinander zur Veränderung der Länge der Transportvorrichtung verschoben werden, wenn eine gegebenenfalls vorhandene Sperre zwischen den Teleskopteilen freigeschaltet wird, indem die Räder einer Achse im gleichen Drehsinn und die Räder der beiden Achsen in unterschiedlichen Drehsinn angetrieben werden.

Nachfolgend sind Ausführungsbeispiele der Erfindung anhand der Figuren 1 bis 4 näher erläutert. Es zeigen:
- Figur 1: eine Ansicht von schräg oben auf ein Ausführungsbeispiel mit zwei paarweise angeordneten schematisch dargestellten Transportvorrichtungen,
- Figur 2: eine Ansicht von unten auf eine in der Figur 1 dargestellte Transportvorrichtung,
- Figur 3: eine Frontansicht einer Transporteinrichtung bei nicht angehobenem Trägerteil
und
- Figur 4: eine Frontansicht einer Transporteinrichtung bei angehobenem Trägerteil.

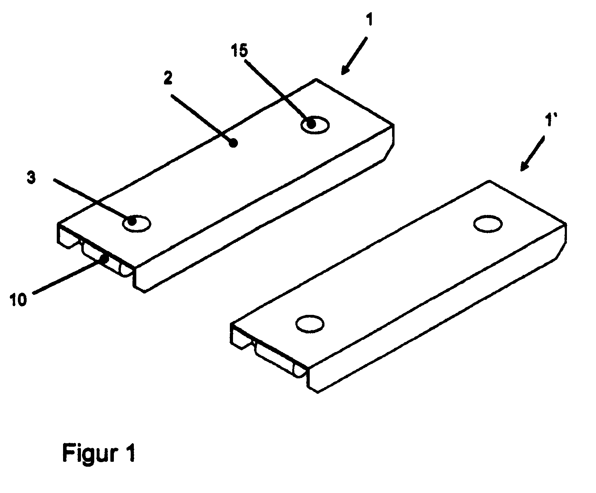

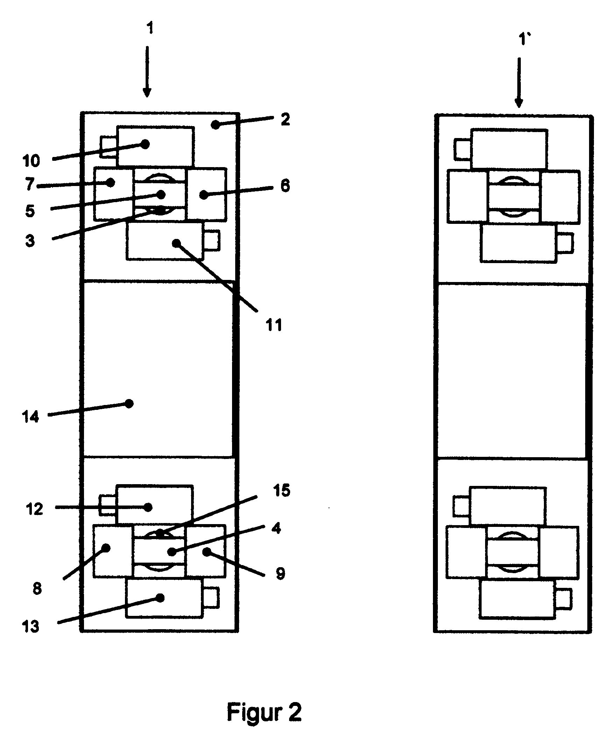

Figur 1 zeigt in schematischer Darstellung zwei identische Ausführungsformen zweier zueinander parallel im Abstand von Aufnahmeöffnungen eines Ladungsträgers, beispielsweise einer Palette, angeordneter Transportvorrichtungen 1,1', die als eine Einheit zur Aufnahme des Ladungsträgers zusammenwirken. In weiteren Ausführungsbeispielen können die Transportvorrichtungen einzeln zur Aufnahme von Ladungen, beispielsweise Möbelstücken oder anderen Ladungen mit einer Freifläche zum Boden, in die die Transportvorrichtung eingefahren werden kann, eingesetzt werden. Die Transportvorrichtungen 1,1' kommunizieren drahtlos einzeln oder miteinander als Paar koordiniert mit einer Leitstelle, die zentral die Steuerung einer oder mehrerer einzelner beziehungsweise zu Paaren zusammengefasster Einheiten von Transportvorrichtungen 1,1' übernimmt. Jede einzelne Transportvorrichtung 1,1' weist ein Trägerteil 2 auf, das im Querschnitt betrachtet vorzugsweise U-förmig ist und eine Länge im Bereich des zu transportierenden Ladungsträgers oder der Ladung aufweist. Variiert die Länge des Ladungsträgers oder wird ein rechteckiger Ladungsträger quer oder längs befördert, kann das Trägerteil 2 mehrteilig, vorzugsweise zweiteilig ausgestaltet sein, wobei die beiden das Trägerteil 2 bildenden Teleskopteile durch Ineinanderschieben in der Länge variiert werden können. Die Trägerteile 2 nehmen die übrigen Bauteile an ihrer Unterseite auf. Die beiden Achsen (siehe Figur 2) für die Räder sind mittels Getrieben 3, 15, die eine Drehbewegung in einen Hub wandeln, beispielsweise Teleskopspindeln oder Spindelgetrieben oder Kugelumlaufgetrieben an den Trägerteilen 2 aufgenommen.

Figur 2 zeigt die Transportvorrichtungen 1,1' von unten, wobei Beschreibung nur auf die Transportvorrichtung 1 gerichtet ist und auf die Transportvorrichtung 1' durch deren gleichen Aufbau übertragen werden kann. Das gezeigte Ausführungsbeispiel der Transportvorrichtung 1 wird von zwei jeweils an einem Getriebe 3, 15 wie Teleskopspindel gegenüber dem Trägerteil 2 verdrehbar aufgenommenen Achsen 4, 5, an denen jeweils zwei Räder 6, 7 beziehungsweise 8,9 verdrehbar befestigt sind, getragen. Die Getriebe 3, 15 können einen Freiwinkel aufweisen, bei denen während einer Verdrehung kein Hub resultiert. Die Räder 6, 7, 8, 9 sind bezüglich ihrer Breite so dimensioniert, dass eine bei einer Drehung der Transportvorrichtung auf dem Boden entstehende Reibung toleriert werden kann. Soll die Reibung weiter vermindert werden, können die Räder zwei- oder mehrteilig ausgestaltet werden, wobei der äußere oder innere Teil angetrieben und die inneren beziehungsweise äußeren Teile nur Tragfunktion haben. Jedes einzelne Rad 6, 7, 8, 9 wird von einer Antriebseinheit 10, 11, 12, 13, beispielsweise einem Elektromotor angetrieben. Die Antriebseinheiten 10, 11, 12, 13 sind in dem gezeigten Ausführungsbeispiel jeweils vor und hinter den Achsen 4, 5 angeordnet und ein Getriebe zur Untersetzung der Drehzahl kann in die Antriebseinheiten 10, 11, 12, 13 integriert sein. Es versteht sich, dass die Antriebseinheiten mit den Achsen 4, 5 bei einer Verdrehung dieser rotieren, das, heißt, mit den Achsen fest verbunden oder an diesen aufgenommen sind. Der - nicht dargestellte - Antrieb zwischen Antriebseinheiten 10, 11, 12, 13 und den Rädern 6, 7, 8, 9 kann über ein Getriebe formschlüssig, beispielsweise mittels eines Zahnrad- oder Riemenantriebs oder dergleichen oder reibschlüssig über einen Reibradantrieb erfolgen. Die Antriebseinheiten 10, 11, 12, 13 werden von einer zwischen den Achsen 4, 5 vorgesehenen Steuer- und Versorgungseinheit 14 angesteuert beziehungsweise mit Energie, beispielsweise elektrischer Energie versorgt. Die Steuer- und Versorgungseinrichtung 14 setzt sich aus einer Steuereinheit, die drahtlos Befehle über eine Datenübertragungsleitung beispielsweise auf Funk-, Infrarot- oder Ultraschallbasis empfängt und mittels eines internen Rechners und einer implementierten Software in Steuersignale der Antriebseinheiten 10, 1, 12, 13 umsetzt, und einer Stromversorgungseinheit, die aus Batterien oder Akkumulatoren besteht und die elektrische Energie für die Antriebseinheiten und die Steuereinheit zur Verfügung stellt, zusammen. Notwenige Steuer- und Versorgungsleitungen zwischen den einzelnen elektrischen Komponenten sind nicht dargestellt.

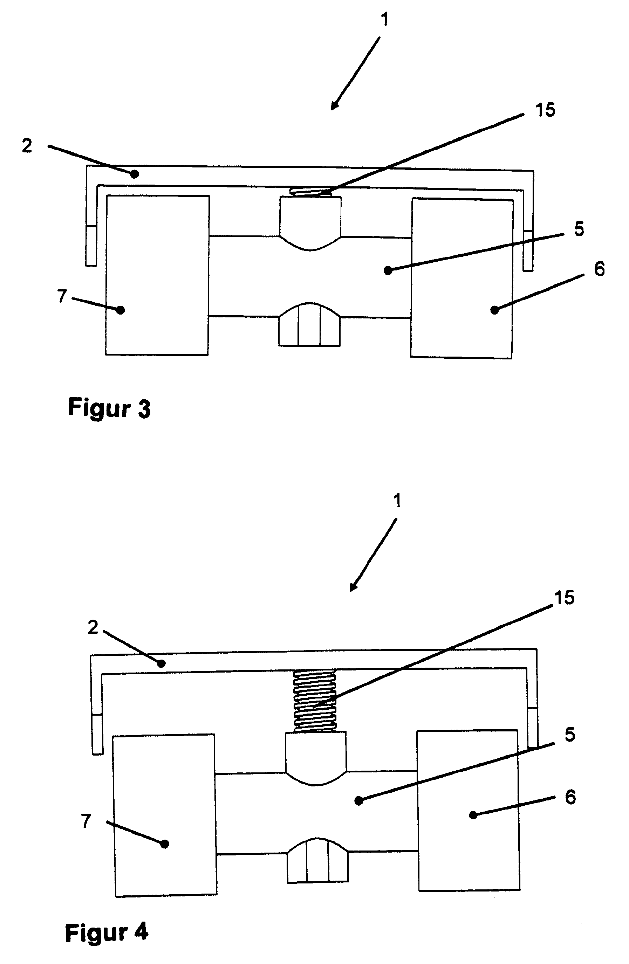

Figur 3 zeigt die Transportvorrichtung 1 in Frontansicht und bei nicht angehobenem Trägerteil 2. In diesem Zustand unterfährt die Transportvorrichtung 1 eine Last, indem beide Räder 6, 7 der Achse 6 gleichsinnig, das heißt, in demselben Drehsinn angetrieben werden. In derselben Weise werden die Räder der zweiten, nicht dargestellten Achse angetrieben. Das Getriebe 15 zum Anheben der Last bleibt während geradliniger Fahrt unbetätigt. Bei einer Verdrehung der Achse 5 während nichtgeradliniger Manöver wie Kurvenfahrten kann ein geringfügiges Anheben des Trägerteils 2 vermieden werden, wenn in dem Getriebe ein Freiwinkel vorgesehen wird, bei dem das Getriebe 15 noch nicht aktiviert wird. Ein Freiwinkel von beispielsweise ± 90° kann eine Manöverierfähigkeit ohne Anheben des Trägerteils 2 gewährleisten. Um das Trägerteil 2 und gegebenenfalls eine darauf befindliche Last anzuheben, werden die für den Antrieb der Räder 6, 7 vorgesehenen Antriebseinheiten 10, 11 (Figur 2) der Achse 5 gegenläufig betrieben, so dass die Achse 5 durch den gegensätzlichen Drehsinn der Räder 6, 7 in eine schraubende Bewegung versetzt und das Getriebe 15 bei einem den Freiwinkel überschreitenden Winkel, beispielsweise bei einer oder mehreren kompletten Umdrehungen der Achse 5, aktiviert wird und das Trägerteil 2 anhebt. In gleicher Weise wird die zweite Achse 4 (Figur 2) betrieben, so dass das Trägerteil 2 vorzugsweise gleichmäßig angehoben wird. Dieselbe Prozedur wird in der Transportvorrichtung 1' durchgeführt, um beispielsweise eine Palette mit zwei Transportvorrichtungen 1,1'anzuheben.

Figur 4 zeigt die Transportvorrichtung 1 mit angehobenem Trägerteil 2 nach mehreren Umdrehungen der Achse 5 um ihre Hochachse durch gegenläufigen Antrieb der Antriebsräder 6, 7. Das Getriebe 15 wird dadurch verdreht und hebt das Trägerteil und eine gegebenenfalls darauf befindliche Last an. Die Transportvorrichtung 1 ist dabei ausschließlich mittels der die Räder 6, 7, 8, 9 (Figur 2) antreibenden Antriebseinheiten 10, 11, 12, 13 (Figur 2) betreibbar. Es kann mit diesen Antriebseinheiten ohne weitere Gestänge und Anlenkungen durch einfachen Radantrieb betrieben werden, wobei eine Anhebung des Trägerteils 2 ebenfalls durch einen Radantrieb erfolgt. Dabei kann die Achse 5 mittels des Getriebes 15 an dem Trägerteil 2 angeordnet werden. Insoweit entfällt ein Lenkgetriebe im Sinne eines Vierradantriebs, bei dem eine Lenkung durch kraftbeaufschlagtes Verdrehen einer Hochachse, an der die Achse für ein oder mehrere Räder aufgenommen ist. Vielmehr erfolgt eine Lenkung der vorgeschlagenen Transportvorrichtung durch Verdrehen der Achse 5 (sowie der in Figur 2 gezeigten Achse 4) durch unterschiedliche Antriebsgeschwindigkeiten beziehungsweise Drehsinn der Räder 6, 7 beziehungsweise 8, 9 (Figur 2).

Anhand des gezeigten Beispiels soll das Verfahren zur Durchführung der wichtigsten Manöver der Transportvorrichtung 1, 1' näher erläutert werden:

### Fahren

Zum Fahren werden alle Antriebseinheiten 6, 7, 8, 9 in gleichem Drehsinn bestromt und damit alle Räder 10, 11, 12, 13 in die entsprechende Fahrrichtung gleichsinnig angetrieben.

### Lenken

Zum Lenken werden richtungsabhängig die an den gleichen Seiten der Achsen 4, 5 angeordneten Räder 7, 8 beziehungsweise 6, 9 schneller oder langsamer angetrieben als die auf der anderen Seite der Achsen 4, 5 angeordneten Räder 6, 9 beziehungsweise 7, 8. Auf diese Weise stellt sich ein Winkel zwischen den Achsen 4, 5 und dem Trägerteil 2 ein. Im Bereich eines Lenkwinkels von bevorzugt ± 90° kann ein Freiwinkel in den Getrieben 3, 15 vorgesehen sein, so dass eine Lenkung ohne Hub erfolgen kann. Weiterhin können die Achsen 4, 5 um ihre Hochachse verdreht werden, wenn die Räder 6, 7 beziehungsweise 8, 9 einer Achse 4 beziehungsweise 5 im umgekehrten Drehsinn angetrieben werden. Damit können sowohl die Achsen 4, 5 einzeln oder paarweise um ihre Hochachse gedreht werden. Bei einer beispielsweise parallelen Anordnung zweier Transportvorrichtungen 1, 1' können diese beispielsweise mit einer aufgenommenen Palette um eine gemeinsame Hochachse gedreht werden, indem alle Achsen 4, 5 der beiden Transportvorrichtungen auf den gemeinsamen Mittelpunkt ausgerichtet werden.

### Heben

Durch gegenläufiges Verdrehen der an einer Achse 4, 5 angeordnetes Drehen der Räder 6, 7 beziehungsweise 8, 9 können die Achsen 4, 5 verdreht und damit das jeweils nachgeordnete Getriebe 3, 15 angetrieben werden, wodurch sich je nach Drehrichtung der Antriebseinheiten 10, 11, 12, 13 und nach Überwinden des gegebenenfalls vorhandenen Freiwinkels ein Anheben oder ein Absenken des Trägerteils 2 ergibt.

### Längenveränderung

Eine Längenveränderung ergibt sich bei einem zweiteiligen Trägerteil bestehend aus zwei Teleskopteilen, bei dem jeweils ein Teleskopteil eine Achse 4, 5 trägt, indem die Räder 6, 7 der Achse 5 bezüglich ihres Drehsinns gleich aber gegenüber den Rädern 8, 9 der Achse 4, die ebenfalls gleichsinnig angetrieben werden, gegenläufig angetrieben werden. Laufen die Räder 6, 7, 8, 9 der beiden Achsen 4, 5 aufeinander zu, wird die Länge verkürzt, laufen sie auseinander wird die Länge des Trägerteils verlängert.

### Bezugszeichenliste

- 1: Transportvorrichtung
- 1': Transportvorrichtung
- 2: Trägerteil
- 3: Getriebe
- 4: Achse
- 5: Achse
- 6: Rad
- 7: Rad
- 8: Rad
- 9: Rad
- 10: Antriebseinheit
- 11: Antriebseinheit
- 12: Antriebseinheit
- 13: Antriebseinheit
- 14: Steuer- und Stromversorgungseinheit
- 15: Getriebe

## Patentansprüche

1. Transportvorrichtung (1, 1') für einen eine Last aufnehmenden Ladungsträger mit einer Einrichtung zum ferngesteuerten Betrieb, einem elektrischen Antrieb zum Lenken, Fahren und Anheben des Ladungsträgers, einem Steuergerät und einer Stromversorgung sowie einem Trägerteil (2) zur Aufnahme des Ladungsträgers, wobei Antrieb, Steuergerät und Stromversorgung innerhalb eines Raumbereichs des Trägerteils (2) angeordnet sind und das Trägerteil (2) den Ladungsträger vollständig unterfährt, **dadurch gekennzeichnet, dass** die Transportvorrichtung (1) zumindest zwei voneinander beabstandete, gegenüber dem Trägerteil (2) um eine Hochachse verdrehbare Achsen (4, 5) mit jeweils zumindest zwei separat und unabhängig voneinander von jeweils einer elektrischen Antriebseinheit (10, 11, 12, 13) angetriebenen Rädern (6, 7, 8, 9) aufweist, wobei zwischen dem Trägerteil (2) und jeweils einer Achse (4, 5) ein durch von den Rädern durch Verdrehen der Achse (4, 5) um Hochachse angetriebenes Getriebe (3, 15) zum Heben und Senken des Trägerteils (2) vorgesehen ist.

2. Transportvorrichtung (1, 1') nach Anspruch 1, **dadurch gekennzeichnet, dass** die Transportvorrichtung (1, 1') paarweise zum Transport eines Ladungsträgers eingesetzt wird.

3. Transportvorrichtung (1) nach Anspruch 1 oder 2, **dadurch gekennzeichnet, dass** zwischen der Achse (4, 5) und dem Trägerteil (2) ein um die Hochachse der Achse (4, 5) ein Freilauf vorgesehen ist.

4. Transportvorrichtung (1) nach Anspruch 1 oder 2, **dadurch gekennzeichnet, dass** die Achse (4, 5) und das Getriebe (3, 15) mittels einer in Drehrichtung um die Hochachse wirksamen Kupplung miteinander koppelbar sind.

5. Transportvorrichtung (1) nach Anspruch 1 oder 2, **dadurch gekennzeichnet, dass** das Getriebe (3, 15) und das Trägerteil (2) mittels einer in Drehrichtung um die Hochachse wirksamen Kupplung miteinander koppelbar sind.

6. Transportvorrichtung (1) nach Anspruch 4 oder 5, **dadurch gekennzeichnet, dass** die Kupplung ferngesteuert betätigbar ist.

7. Transportvorrichtung nach einem der Ansprüche 1 bis 6, **dadurch gekennzeichnet, dass** das Trägerteil zumindest aus zwei gegeneinander verschiebbaren Teleskopteilen gebildet ist.

8. Verfahren zur Steuerung einer Transportvorrichtung (1) nach einem der Ansprüche 1 bis 7, **dadurch gekennzeichnet, dass** die Transportvorrichtung (1) durch einen gleichsinnigen Antrieb aller Räder (6, 7, 8, 9) fortbewegt und durch unterschiedlichen Antrieb von Rädern (6, 7, 8, 9) einer Achse (4, 5) mit unterschiedlicher Drehzahl und/oder Drehsinn gelenkt wird.

9. Verfahren nach Anspruch 8, **dadurch gekennzeichnet, dass** die Räder (6, 7; 8, 9) einer Achse (4; 5) in gegenläufigem Drehsinn verdreht werden und das Getriebe (3, 15) zum Heben und Senken des Trägerteils (2) antreiben.

10. Verfahren nach Anspruch 8 oder 9, **dadurch gekennzeichnet, dass** nach einer Freischaltung einer Sperre zwischen zwei Teleskopteilen die Länge des Trägerteils geändert wird, indem die Räder (6, 7; 8, 9) einer Achse (4; 5) im gleichen Drehsinn und die Räder (6, 7; 8, 9) der beiden Achsen (4, 5) in unterschiedlichen Drehsinn angetrieben werden.

## Claims

1. Transporting device (1, 1') for a load supporting element receiving a load, with a device for remote-controlled operation, an electric drive for steering, moving and raising the load supporting element, a control unit and a current supply and also with a supporting part (2) for receiving the load supporting element, wherein drive, control unit and current supply are arranged within a spatial region of the supporting part (2), and the supporting part (2) moves completely under the load supporting element, **characterized in that** the transporting device (1) has at least two axles (4, 5) which are spaced apart from each other, are rotatable about a vertical axis in relation to the supporting part (2) and have in each case at least two wheels (6, 7, 8, 9) which are driven separately and independently of each other by a respective electric drive unit (10, 11, 12, 13), wherein a gearing (3, 15) which is driven by the wheels by rotation of the axle (4, 5) about the vertical axis and is provided for lifting and lowering the supporting part (2) is provided between the supporting part (2) and a respective axle (4, 5).

2. Transporting device (1, 1') according to Claim 1, **characterized in that** the transporting device (1, 1') is used in pairs for transporting a load supporting element.

3. Transporting device (1) according to Claim 1 or 2, **characterized in that** a free wheel about the vertical axis of the axle (4, 5) is provided between the axle (4, 5) and the supporting part (2).

4. Transporting device (1) according to Claim 1 or 2, **characterized in that** the axle (4, 5) and the gearing (3, 15) can be coupled to each other by means of a clutch which is effective in the direction of rotation about the vertical axis.

5. Transporting device (1) according to Claim 1 or 2, **characterized in that** the gearing (3, 15) and the supporting part (2) can be coupled to each other by means of a clutch which is effective in the direction of rotation about the vertical axis.

6. Transporting device (1) according to Claim 4 or 5, **characterized in that** the clutch is actuable in a remote-controlled manner.

7. Transporting device according to one of Claims 1 to 6, **characterized in that** the supporting part is formed from at least two telescopic parts which are displaceable in relation to each other.

8. Method for controlling a transporting device (1) according to one of Claims 1 to 7, **characterized in that** the transporting device (1) is propelled by unidirectional driving of all of the wheels (6, 7, 8, 9) and is steered by different driving of wheels (6, 7, 8, 9) of an axle (4, 5) at a different rotational speed and/or direction of rotation.

9. Method according to Claim 8, **characterized in that** the wheels (6, 7; 8, 9) of an axle (4; 5) are rotated in an opposite direction of rotation and drive the gearing (3, 15) for lifting and lowering the supporting part (2).

10. Method according to Claim 8 or 9, **characterized in that**, after clearing of a barrier between two telescopic parts, the length of the supporting part is changed by the wheels (6, 7; 8, 9) of one axle (4; 5) being driven in the same direction of rotation and the wheels (6, 7; 8, 9) of the two axles (4, 5) being driven in a different direction of rotation.

## Revendications

1. Dispositif de transport (1, 1') pour un support de charge recevant une charge, comprenant un dispositif pour un fonctionnement commandé à distance, un entraînement électrique pour diriger, conduire et soulever le support de charge, un appareil de commande et une alimentation électrique ainsi qu'une partie de support (2) pour recevoir le support de charge, l'entraînement, l'appareil de commande et l'alimentation électrique étant disposés à l'intérieur d'une région spatiale de la partie de support (2) et la partie de support (2) passant complètement en dessous du support de charge, **caractérisé en ce que** le dispositif de transport (1) présente au moins deux essieux (4, 5) espacés l'un de l'autre, pouvant tourner par rapport à la partie de support (2) autour d'un axe vertical, avec à chaque fois au moins deux roues (6, 7, 8, 9) entraînées séparément et indépendamment l'une de l'autre par une unité d'entraînement électrique respective (10, 11, 12, 13), une transmission (3, 15) entraînée par les roues autour de l'axe vertical par rotation de l'essieu (4, 5) pour soulever et abaisser la partie de support (2) étant prévue entre la partie de support (2) et un essieu respectif (4, 5).

2. Dispositif de transport (1, 1') selon la revendication 1, **caractérisé en ce que** le dispositif de transport (1, 1') est utilisé par paire pour le transport d'un support de charge.

3. Dispositif de transport (1) selon la revendication 1 ou 2, **caractérisé en ce qu'**entre l'essieu (4, 5) et la partie de support (2) est prévue une roue libre autour de l'axe vertical de l'essieu (4, 5).

4. Dispositif de transport (1) selon la revendication 1 ou 2, **caractérisé en ce que** l'essieu (4, 5) et la transmission (3, 15) peuvent être accouplés l'un à l'autre au moyen d'un accouplement agissant dans le sens de rotation autour de l'axe vertical.

5. Dispositif de transport (1) selon la revendication 1 ou 2, **caractérisé en ce que** la transmission (3, 15) et la partie de support (2) peuvent être accouplées l'une à l'autre au moyen d'un accouplement agissant dans le sens de rotation autour de l'axe vertical.

6. Dispositif de transport (1) selon la revendication 4 ou 5, **caractérisé en ce que** l'accouplement peut être actionné par une commande à distance.

7. Dispositif de transport selon l'une quelconque des revendications 1 à 6, **caractérisé en ce que** la partie de support est formée d'au moins deux parties télescopiques pouvant être coulissées l'une par rapport à l'autre.

8. Procédé de commande d'un dispositif de transport (1) selon l'une quelconque des revendications 1 à 7, **caractérisé en ce que** le dispositif de transport (1) est avancé par un entraînement dans le même sens de toutes les roues (6, 7, 8, 9) et est dirigé par un entraînement différent des roues (6, 7, 8, 9) d'un essieu (4, 5) avec une vitesse de rotation et/ou un sens de rotation différents.

9. Procédé selon la revendication 8 **caractérisé en ce que** les roues (6, 7 ; 8, 9) d'un essieu (4 ; 5) sont mises en rotation en sens et entraînent la transmission (3, 15) pour soulever et abaisser la partie de support (2).

10. Procédé selon la revendication 8 ou 9, **caractérisé en ce qu'**après une libération d'un verrouillage entre deux parties télescopiques, la longueur de la partie de support est modifiée, **en ce que** les roues (6, 7 ; 8, 9) d'un essieu (4 ; 5) sont entraînées dans le même sens de rotation et les roues (6, 7 ; 8, 9) des deux essieux (4, 5) sont entraînées dans des sens de rotation différents.
